# EUROPÄISCHE PATENTSCHRIFT

(11) **EP 2 898 586 B1**
(45) Veröffentlichungstag und Bekanntmachung des Hinweises auf die Patenterteilung: **23.12.2020**
(21) Anmeldenummer: 13771093.5
(22) Anmeldetag: 24.09.2013
(51) Int. Cl.: H02J 7/00, H02J 7/14

(54) **ENERGIEMANAGEMENT FÜR KRAFTFAHRZEUG MIT KOPPELSPEICHERVORRICHTUNG**
ENERGY MANAGEMENT FOR A MOTOR VEHICLE HAVING A COUPLING STORE DEVICE
GESTION D'ÉNERGIE POUR UN VÉHICULE DOTÉ D'UN DISPOSITIF ACCUMULATEUR DE COUPLAGE

(30) Priorität: 24.09.2012 DE 102012217184
(43) Veröffentlichungstag der Anmeldung: 29.07.2015
(73) Patentinhaber: Bayerische Motoren Werke Aktiengesellschaft, 80809 München (DE)
(72) Erfinder: SCHINDLER, Moritz, 80809 München (DE)
(86) Internationale Anmeldenummer: PCT/EP2013/069792
(87) Internationale Veröffentlichungsnummer: WO 2014/044862

(56) Entgegenhaltungen:
- DE-A1-102009 034 180
- JP-A- 2004 025 979
- US-A1- 2011 001 352
- US-A1- 2011 264 317

## Beschreibung

Die Erfindung betrifft ein Kraftfahrzeug mit zumindest einem Steuergerät, mit einer leistungselektronischen Einheit und mit einer Energiespeichervorrichtung, die einen ersten elektrischen Energiespeicher und einen zu dem ersten elektrischen Energiespeicher parallel geschalteten oder parallel schaltbaren zweiten elektrischen Energiespeicher umfasst. Aufgrund der Anzahl von elektrischen Verbrauchern in modernen Kraftfahrzeugen ist die Sicherstellung der elektrischen Versorgung in der Fahrzeugentwicklung in jüngerer Zeit neuartigen Anforderungen ausgesetzt. Dies führt dazu, dass komplexere Bordnetzarchitekturen vorgeschlagen werden, um Energiebedarfe im Fahrzeug decken zu können. Dies wird beispielsweise in der Schrift DE 10 2009 008 177 A1 erörtert.

Zusätzlich erfordern die komplexeren Bordnetzarchitekturen, insbesondere Bordnetzarchitekturen von Hybridfahrzeugen mit teilweise elektrifiziertem Antriebsstrang ein aufwändiges Energiemanagement, um Energieflüsse im Fahrzeug zielgerichtet zu regeln. Dies geht beispielsweise aus der Schrift US 2005/0228553 A1 hervor, in der ein teilweise vorausschauendes Energiemanagement für Hybridfahrzeuge beschrieben wird.

US2011/0001352 A1 offenbart eine Bordnetzarchitektur, in der zwei parallel geschaltete Batterien genutzt werden.

Es ist eine Aufgabe der Erfindung, ein verbessertes Kraftfahrzeug mit einem Steuergerät, mit einer leistungselektronischen Einheit und mit einer Energiespeichervorrichtung, die einen ersten elektrischen Energiespeicher und einen zu dem ersten elektrischen Energiespeicher parallel geschalteten oder parallel schaltbaren zweiten elektrischen Energiespeicher umfasst, zu beschreiben.

Gelöst wird diese Aufgabe durch ein Kraftfahrzeug gemäß Anspruch 1. Vorteilhafte Ausführungsformen und Weiterbildungen der Erfindung ergeben sich aus den abhängigen Ansprüchen.

Erfindungsgemäß weisen die beiden Energiespeicher eine gemeinsame Koppelspannung bei jeweils unterschiedlichen Ladezuständen auf, es ist eine Basisspannung im Wesentlichen von der leistungselektronischen Einheit einstellbar, und ein auf dem zumindest einen Steuergerät lauffähiges prädiktives Energiemanagement ermittelt eine Sollvorgabe der Basisspannung in Abhängigkeit von einer prädizierten Ladebilanz der Energiespeichervorrichtung.

Dies bedeutet, dass durch das Energiemanagement des Fahrzeugs eine von der Koppelspannung abweichende Basisspannung einstellbar ist. Die eigentliche Spannungsstellung erfolgt durch die leistungselektronische Einheit wie etwa durch einen Gleichstromsteller oder einen Generator oder implizit durch ein negatives Überpotential an den die Energiespeichervorrichtung bildenden Energiespeichern infolge eines Entladestroms zur Versorgung von elektrischen Verbrauchern. Die Vorgabe der Basisspannung durch das Energiemanagement erfolgt in einer Weise, dass bei dem bevorstehenden Nutzungsprofil des Fahrzeugs die spezifischen Vorteile der die Energiespeichervorrichtung bildenden Energiespeicher zum Tragen kommen.

Entsprechend der Erfindung geschieht dies dadurch, dass das prädiktive Energiemanagement bei einem bevorstehenden Nutzungsprofil des Fahrzeugs, das zu einer prädizierten negativen Ladebilanz führt, die Basisspannung erhöht.

Bei einer vorhandenen und bei einer bevorstehenden negativen Ladebilanz wird die Basisspannung erhöht. Die Basisspannung wird somit selbst bei einem Nutzungsprofil, das zu einem aktuellen Zeitpunkt eine ausgeglichene Ladebilanz der Energiespeichervorrichtung darstellt, infolge der prädizierten negativen Ladebilanz erhöht. Auf diese Weise ist die Zyklisierung der Energiespeicher zugunsten geringerer Zyklisierung des einen Energiespeichers und erhöhter Zyklisierung des anderen Energiespeichers prädiktiv verschiebbar. Beim Einsatz eines besonders zyklenfesten Energiespeichers ist dies von Vorteil. Bevorzugt ist der zyklenfeste Energiespeicher der Energiespeicher mit dem niedrigeren relativen Ladezustand bei gegebener Koppelspannung, so dass dieser unter der erhöhten Zyklenlast betrieben wird.

Ferner erhöht das prädiktive Energiemanagement bei einer bevorstehenden Standphase die Basisspannung.

Dadurch wird das Maß an Zyklisierung der Energiespeichervorrichtung zusätzlich in Richtung des zyklenfesten Energiespeichers verschoben.

Außerdem ist es vorteilhaft, wenn das prädiktive Energiemanagement bei einem bevorstehenden Nutzungsprofil des Fahrzeugs, das zu einer prädizierten positiven Ladebilanz führt, die Basisspannung reduziert.

Die Basisspannung der Energiespeichervorrichtung kann gesenkt werden, wenn das bevorstehende Nutzungsprofil des Fahrzeugs eine positive Ladebilanz zeigt. Somit wird insbesondere das Rekuperationspotential bei einem Fahrzeug mit einer dem Fachmann bekannten Bremsenergierückgewinnungsfunktion (BER) aufrecht erhalten. Dies erhöht die Effizienz bei der Rückgewinnung von Bremsenergie durch einen aufgrund geringerem Ladezustand und höherem Überpotential beim Anlegen der Rekuperationsspannung erhöhten Ladestrom.

Das prädiktive Energiemanagement ermittelt für einen bevorstehenden Zeitraum die Ladebilanz der Energiespeichervorrichtung anhand einer Auswahl und/oder Kombination der folgenden Datenquellen: Navigationsdaten, Verkehrsinformationsdaten, routenbezogene Wetterdaten, Erkennungsdaten eines Fahrzeugnutzertyps, Fahrzeug-Fahrzeug-Kommunikationsdaten, Streckenhäufigkeitserkennungsdaten, Zustandsdaten der leistungselektronischen Einheit und Zustandsdaten der beiden elektrischen Energiespeicher wie Ladezustand oder Temperatur.

Das Energiemanagement, das als Software auf einem oder mehreren Fahrzeugsteuergeräten lauffähig ist, verfügt über mehrere Informationseingänge von Sensoren des Fahrzeugs, von Aktuatoren des Fahrzeugs sowie von Kommunikationsschnittstellen des Fahrzeugs. Anhand einer aktuellen Informationslage ermittelt das Energiemanagement eine Prognose der Ladebilanz der Energiespeichervorrichtung für einen bestimmten bevorstehenden Nutzungszeitraum des Fahrzeugs. Das Energiemanagement kann auch selbstlernende Algorithmen umfassen. Die Vorgabe der Basisspannung erfolgt innerhalb festgelegter, durch die elektrochemischen Eigenschaften der Energiespeichervorrichtung charakteristischer Grenzen. Dabei ist die Vorgabe der Basisspannung in erster Näherung umgekehrt proportional zur ermittelten Ladebilanz.

Als dem Fahrzeug zur Verfügung stehende Sensoren kommen insbesondere den jeweiligen Energiespeichern zugeordnete Batteriesensoren in Betracht, die zeitabhängig Spannung, Strom und Temperatur der jeweiligen Speicher aufzeichnen.

Die Energiespeichervorrichtung ist beispielsweise realisierbar, wenn der erste Energiespeicher als Blei-Säure-Batterie und der zweite Energiespeicher als Lithium-Ionen-Batterie ausgeführt ist.

Vorteilhafterweise sind diese beiden Energiespeicher durch teilweise überlappende Ruhespannungskennlinien gekennzeichnet, wobei die Blei-Säure-Batterie bei hohen Stromraten über alle relativen Ladezustände einen im Wesentlichen geringeren Entladeinnenwiderstand wie die Lithium-Ionen-Batterie und die Lithium-Ionen-Batterie über alle relativen Ladezustände einen im Wesentlichen geringeren Ladeinnenwiderstand wie die Blei-Säure-Batterie aufweist.

Die Erfindung beruht auf den nachfolgend dargelegten Überlegungen:
Ausgangspunkt ist ein konventionelles Fahrzeugbordnetz mit einer einzelnen Blei-Säure-Batterie als Energiespeicher für das Basisbordnetz, wobei das Fahrzeug gegebenenfalls mit Micro-Hybrid-Funktionalitäten wie einer Bremsenergierückgewinnungsfunktion und/oder mit einer automatischen Motor-Stopp-Start-Automatik (MSA) ausgestattet ist.

Betriebsstrategien für das konventionelle Bordnetz können darin bestehen, die Lebensdauer der Blei-Säure-Batterie (BSB) zu maximieren. Dies ist bei der dem Fachmann bekannten BSB-Technologie insbesondere bei dauerhafter Vollladung der BSB zu erreichen, d.h. bei Anwendung einer Vollladestrategie. Um jedoch die Möglichkeit der Rekuperation von aus kinetischer Energie gewandelter elektrischer Energie auch mit der BSB zu eröffnen, wird ein gezielt teilentladener Betrieb der BSB gewählt, der sich nachteilig auf die Lebensdauer der BSB auswirken kann. Dies kann sich in ungünstigen Betriebszuständen besonders nachteilig bemerkbar machen, wenn der Ladezustand der BSB zusätzlich durch häufige Stoppphasen durch die MSA und durch übermäßige Entladung in der Abstell- und Nachlaufphase des Fahrzeugs gesenkt wird.

Moderne 2-Batterien-Konzepte verfügen über Energiespeicher unterschiedlicher chemischer Technologien wie etwa über die Kombination einer Blei-Säure-Batterie (BSB) mit einer Lithium-Ionen-Batterie (LiB).

Bei spannungsneutral parallel geschalteten Energiespeichern, d.h. bei einer direkten galvanischen Verbindung stellt sich eine den Energiespeichern gemeinsame Spannung ein, die als Koppelspannung bezeichnet wird.

Für ein Fahrzeug mit einer solchen Energiespeichervorrichtung wird ein geschicktes, Energiemanagement vorgeschlagen, das die spezifischen Vorteile jeweils der BSB und der LiB speziell im Verbund der Energiespeichervorrichtung, d.h. in Anwesenheit des jeweils anderen Energiespeichers vorausschauend zur Geltung bringen.

Im Folgenden werden anhand der Fig. 1-3 bevorzugte Ausführungsbeispiele der Erfindung beschrieben. Daraus ergeben sich weitere Details, bevorzugte Ausführungsformen und Weiterbildungen der Erfindung. Es zeigen schematisch
Fig. 1 die Ruhespannung von zwei Energiespeichern in Abhängigkeit vom relativen Ladezustand,
Fig. 2 die Ruhespannungslage der zwei Energiespeicher in einem Koppelspeichersystem,
Fig. 3 die Ladeinnenwiderstandskennlinie der beiden Energiespeicher und
Fig. 4 die Entladeinnenwiderstandskennlinie der beiden Energiespeicher.

Gemäß einem Ausführungsbeispiel umfasst das elektrische Bordnetz eines Kraftfahrzeugs neben einer leistungselektronischen Einheit wie einem Generator oder einem Gleichstromsteller sowie einem Starter für den Verbrennungsmotor zumindest ein Steuergerät und elektrische Verbraucher. Sowohl als Energiequellen wie als Energiesenken dienen in dem Bordnetz mindestens zwei parallel geschaltete oder parallel schaltbare elektrische Energiespeicher. Diese können eine direkte galvanische Verbindung aufweisen, d.h. die Energiespeicher können dauerhaft parallel geschaltet betrieben werden, oder es kann sich eine Schalteinheit zwischen den beiden Energiespeichern befinden, um sie parallel zu schalten. Es können dabei spannungskoppelnde Elemente zwischen den Energiespeichern wie Gleichstromsteller, Trennschalter, Relais, etc. zum Einsatz kommen. Die Ausführungsform ist dabei im Wesentlichen auf die beiden Energiespeicher in parallel geschalteter Ausführung bezogen.

Es wird weiterhin ein System aus zwei parallelen Energiespeichern betrachtet, das i.f. als Koppelspeichersystem bezeichnet wird.

Zusätzlich ist einer der beiden Energiespeicher, bevorzugt beide Energiespeicher, mit einem Batteriesensor versehen, wobei die Sensoren in ein Datenkommunikationssystem wie etwa einem Bussystem des Fahrzeugs eingebunden sind. Die Sensoren ermitteln zeitabhängig Spannung, Strom und Temperatur der Speicher. Dadurch ist durch die Batteriesensoren oder durch das Steuergerät des Fahrzeugs in Form einer zeitlichen Integration des Stroms der jeweiligen Energiespeicher, der aus den jeweiligen Ladeströmen und Entladeströmen der beiden Energiespeicher gebildet wird, der Ladezustand der jeweiligen Energiespeicher und ein Ladezustand der Energiespeichervorrichtung während des Betriebs der Energiespeichervorrichtung ermittelbar. Für die Prädiktion der Ladebilanz des Koppelspeichersystems ist dies wesentlich. Die Prädiktion wird von einem auf einem Steuergerät des Fahrzeugs lauffähigen Energiemanagement (EM) durchgeführt. Das Energiemanagement wird als prädiktives Energiemanagement bezeichnet.

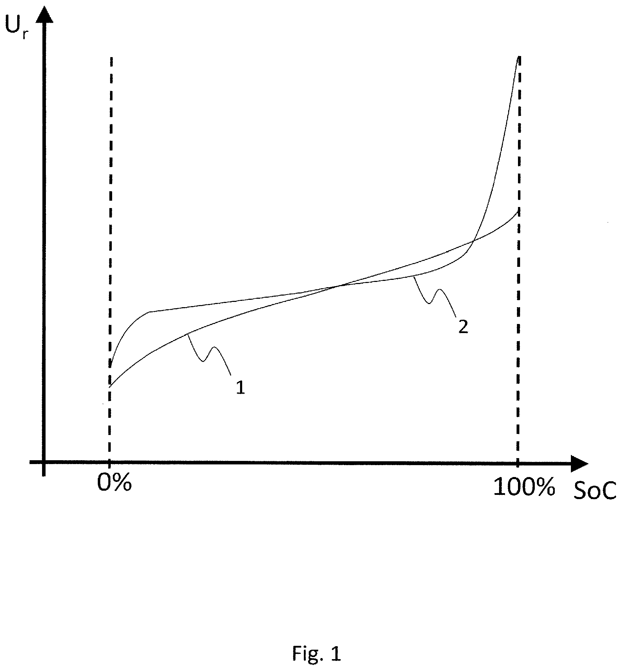

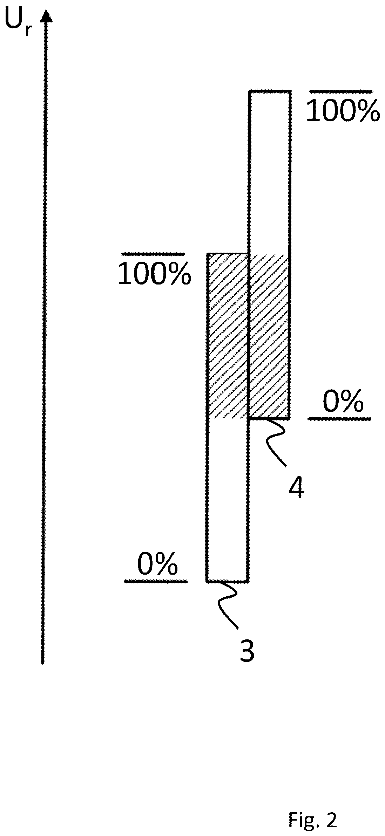

Jeder der beiden Speicher weist eine Kennlinie der Ruhespannung Uᵣ in Abhängigkeit von dem jeweiligen relativen Ladezustand des Speichers auf, siehe Fig. 1. Es ist die Ruhespannungskennlinie (1) des ersten Energiespeichers und die Ruhespannungskennlinie (2) des zweiten Energiespeichers dargestellt. Die beiden Speicher verhalten sich derart, dass im Wesentlichen über den gesamten Bereich des relativen Ladezustands sich die Ruhespannungskennlinien der beiden Energiespeicher zumindest teilweise überschneiden. Dies geht aus Fig. 2 hervor mit einem ersten Spannungsbereich (3), den der erste Energiespeicher abdeckt und einem zweiten Spannungsbereich (4), den der zweite Energiespeicher abdeckt. Dies bedeutet, dass es jeweils einen Ladezustandsbereich des Speichers gibt, dem ein Spannungsbereich der jeweiligen Ruhespannungskennlinie zugeordnet ist, der beiden Speichern gemeinsam ist. Zudem bedeutet dies, dass es jeweils einen Ladezustandsbereich eines Speichers gibt, dem ein Spannungsbereich der jeweiligen Ruhespannungskennlinie zugeordnet ist, den der jeweils andere Speicher nicht abdeckt und es jeweils einen Ladezustandsbereich eines Speichers gibt, dem ein Spannungsbereich der jeweiligen Ruhespannungskennlinie zugeordnet ist, den der jeweils andere Speicher ebenfalls abdeckt (schraffierte Fläche in Fig. 2).

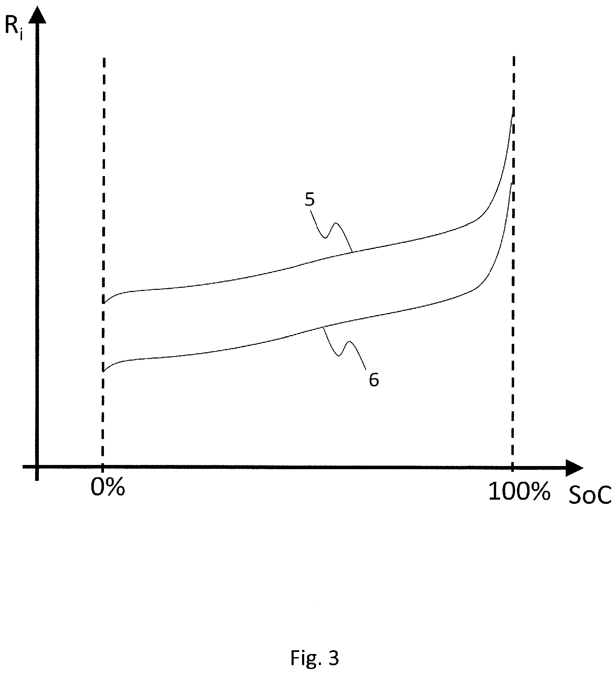

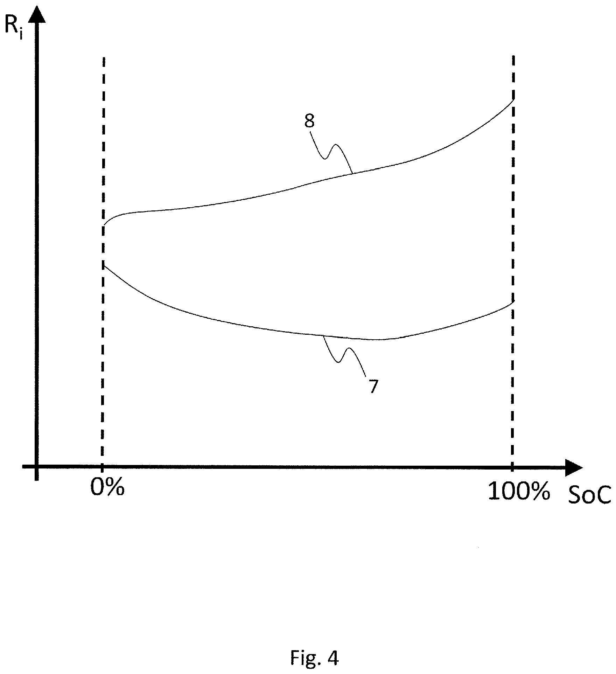

Beide Energiespeicher weisen jeweils eine ladezustandsabhängige Ladeinnenwiderstandskennlinie und eine ladezustandsabhängige Entladeinnenwiderstandskennlinie auf. Der Innenwiderstand wird als Rᵢ angegeben. Die Ladeinnenwiderstandskennlinie des ersten Energiespeichers (5, in Fig. 3) liegt im Wesentlichen im gesamten relativen Ladezustandsbereich von 0 % state-of-charge (SoC) bis 100 % SoC in Richtung höherer Widerstände oberhalb der Ladeinnenwiderstandskennlinie des zweiten Energiespeichers (6, in Fig. 3). Die Entladeinnenwiderstandskennlinien verhalten sich bei hohen Stromraten invers, d.h. die Entladeinnenwiderstandskennlinie des ersten Energiespeichers (7, in Fig. 4) liegt im Wesentlichen im gesamten relativen Ladezustandsbereich unterhalb der Entladeinnenwiderstandskennlinie des zweiten Energiespeichers (8, in Fig. 4). Mit hohen Stromraten sind insbesondere Ströme von mehr als 100 - 200 A bezeichnet.

Die beschriebenen relativen Lagen der Innenwiderstandskennlinien können in den Randbereichen des relativen Ladezustandsbereichs, d.h. bei und nahe bei 0 % sowie bei und nahe bei 100 % Ladezustand (state-of-charge, SoC) Anomalitäten aufweisen, die in diesen Randbereichen einen anderen Verlauf als den beschriebenen wesentlichen Verlauf zeigen. Die Vorteile und Effekte der Erfindung bleiben durch diese Anomalitäten unbeeinflusst, so dass die Anomalitäten die Erfindung nicht einschränken. Als Beispiel kann etwa ein starker Anstieg der Entladeinnenwiderstandskennlinie bei einer Blei-Säure-Batterie als erstem Energiespeicher gegen den Ladezustand 0 % erwähnt werden, der möglicherweise die Entladeinnenwiderstandskennlinie eine Lithium-Ionen-Batterie als zweitem Energiespeicher gegen den Ladezustand 0 % in Richtung des höheren Widerstands insbesondere bei kleinen Stromraten übersteigt. Im Wesentlichen verläuft die Entladeinnenwiderstandskennlinie der Blei-Säure-Batterie in Richtung höherer Widerstände jedoch unterhalb der Entladeinnenwiderstandskennlinie der Entladeinnenwiderstandskennlinie der Lithium-Ionen-Batterie.

Außerdem beziehen sich die Betrachtungen der Widerstandskennlinien auf einen Temperaturbereich, der bei einer Anwendung im Automobilbau als typischer Temperaturbereich für einen Energiespeicher betrachtet wird, d.h. auf - 20 °C bis etwa + 60 °C.

Beispielhaft können für das prädiktive Energiemanagement des Koppelspeichersystems als Energiespeicher ohne Beschränkung der Allgemeinheit eine Blei-Säure-Batterie (BSB) in Nasstechnologie oder in AGM-Technologie als erster Energiespeicher mit einer Ruhespannungslage von 10,5 Volt bis ca. 13,0 Volt und eine Lithium-Ionen-Batterie (LiB) als zweiter Energiespeicher angeführt werden. Die LiB ist beispielsweise aus einer Reihenschaltung von vier Zellen des elektrochemischen Redoxsystems Lithium-Eisenphosphat (LiFePO₄)/Graphit bei einer Ruhespannungslage von 10,4 Volt bis 14,0 Volt, von vier Zellen des elektrochemischen Redoxsystems Lithium-Nickel-Mangan-Cobalt (Li-NₓM_{y}C_{z})/Graphit bei einer Ruhespannungslage von 12,6 Volt bis 16,4 Volt oder von sechs Zellen des elektrochemischen Redoxsystems Lithium-Nickel-Mangan-Cobalt (Li-NₓM_{y}C_{z})/Lithium-Titanat (LiₓTi_{y}O_{z}) bei einer Ruhespannungslage von 12,0 Volt bis 15,6 Volt aufgebaut. Der zweite Energiespeicher kann auch als Superkondensator ausgeführt sein.

Ohne Beschränkung auf eine der dargestellten Varianten wird weiterhin für das prädiktive Energiemanagement des Koppelspeichersystems die Ausführung der LiB mit dem System Lithium-Eisenphosphat/Graphit betrachtet. Vorgeschlagen wird dabei ein System mit einer beispielhaften Nennkapazität der LiB von 5 - 20 Ah und der BSB von 70 - 90 Ah.

Bei dem Koppelspeichersystem liegt zu jedem Betriebszeitpunkt infolge der direkten galvanischen Verbindung das gleiche elektrische Potential an, welches als Koppelspannung bezeichnet wird. Diese Spannung kann von einer von dem Energiemanagement vorgegebenen Sollspannung abweichen. Die Sollspannungsvorgabe wird als Basisspannung bezeichnet.

Die BSB weist in einem Ladezustandsbereich von ca. 0 % bis 100 % einen Ruhespannungsbereich von ca. 10,5 Volt bis 13,0 Volt auf. Die LiB weist in einem Ladezustandsbereich von ca. 0 % bis 80 % einen Ruhespannungsbereich von ca. 10,4 Volt bis 13,2 Volt auf, wobei sich der gesamte Ladezustandsbereich von ca. 25 % bis 80 % nahezu bei einer Ruhespannungslage von 13,2 Volt befindet. Bei einer Ruhespannung von 13,0 Volt liegt der Ladezustand der LiB etwa bei 15 %.

Ferner weist die BSB in einem Ladezustandsbereich von ca. 75 % bis 100 % einen Ruhespannungsbereich von ca. 12,6 Volt bis 13,0 Volt auf. Die maximale Ladespannung des Koppelspeichersystems beträgt ohne Beschränkung der Allgemeinheit 14,80 Volt. Die LiB weist in einem Ladezustandsbereich von ca. 0 % bis 80 % einen Ruhespannungsbereich von ca. 10,4 Volt bis 13,2 Volt auf, wobei sich der gesamte Ladezustandsbereich von ca. 25 % bis 80 % nahezu bei einer Ruhespannungslage von 13,2 Volt befindet. Bei der BSB tritt bei einem Überpotential ab 400 - 500 mV über der Ruhespannungslage nennenswert Ladung der Batterie auf, bei der LiB etwa ab 30-50 mV Überpotential über der Ruhespannungslage.

Demgemäß zeigt das Koppelspeichersystem basierend auf den das System bildenden Speichereigenschaften in einem Betriebszustand bei der Koppelspannung von etwa 13,0 Volt (d.h. bei einem Ladezustand der BSB von ca. 95-100 % und bei einem Ladezustand der LiB von etwa 15 %) in Abhängigkeit von einer eingestellten Basisspannung U_{B} folgende Zustände näherungsweise und bei mäßigen Temperaturen, z.B. Raumtemperatur:
- 14,8 Volt ≥ U_{B} ≥13,4 Volt: kräftige Ladung der LiB (Ladestrom ca. >25 A), Ladung der BSB
- 13,4 Volt ≥ U_{B} ≥13,2 Volt: signifikante Ladung der Li-Ionen-Batterie (ca. 5 A<Ladestrom<25 A), leichte Ladung der AGM-Batterie (Ladestrom ca. <5 A)
- 13,2 Volt ≥ U_{B} ≥130 Volt: fast ausschließlich Entladung der LiB
- 13,0 Volt ≥ U_{B} ≥0 Volt: Entladung beider Energiespeicher

Es ist dabei die Basisspannung von der Koppelspannung zu unterscheiden: Die Koppelspannung ist das von dem Koppelspeichersystem gemeinsam eingestellte Potential der beiden Energiespeicher. Die Basisspannung ist ein von außen anlegbares und führbares Potential.

Die Führung der Basisspannung, d.h. die Sollspannungsvorgabe des prädiktiven Energiemanagements, erfolgt durch die leitungselektronische Einheit, bevorzugt eine oder mehrere generatorisch arbeitende elektrische Maschinen wie einen Fahrzeuggenerator. Alternativ zu dem Generator setzt die Sollspannungsvorgabe etwa ein Gleichstromsteller in die Basisspannung um.

Einem Regler des Generators, von dem weiterhin ausgegangen wird, wird dabei eine Sollspannungsvorgabe von dem Steuergerät übermittelt. Durch eine wiederholte Sollspannungsvorgabe des Steuergeräts wird die Basisspannung vom Generator geführt. Die Sollspannungsvorgabe des Steuergeräts erfolgt im Rahmen des als Software auf dem Steuergerät implementierten prädiktiven Energiemanagements des Fahrzeugs auf Basis der ermittelten Ladebilanz für einen bevorstehenden Zeitraum, der als Beobachtungszeitraum bezeichnet wird. Der bevorstehende Zeitraum fällt bevorzugt mit sich auf die Ladebilanz charakteristisch auswirkenden Nutzungsabschnitten des Fahrzeugs (z.B. Streckenabschnitten) zusammen.

Die Ermittlung der Ladebilanz sowie die damit verbundene Vorgabe der Sollspannung erfolgt mit einer zeitlichen Wiederholrate, um die Sollspannungsvorgabe iterativ zu korrigieren. Das Regelziel ist eine ausgeglichene Ladebilanz über einen Zeitraum, der den bevorstehenden Zeitraum mit einschließt. Die Tatsache der Ausgeglichenheit der Ladebilanz ist in diesem Sinne also erst rückschauend feststellbar. Insbesondere deshalb wird das Energiemanagement als prädiktiv bezeichnet.

Der Zeitraum des Anlegens der Sollspannung wird als Steuerzeitraum bezeichnet. Gemäß der Prädiktion des Energiemanagements liegt der Steuerzeitraum zeitlich vor dem Beobachtungszeitraum ggf. auch am Beginn des Beobachtungszeitraums. Durch die zeitliche Wiederholung wird eine zwischenzeitliche Erfüllung des Regelziels überprüft und ggf., zum Beispiel bei unerwartet hohem oder niedrigem Energieverbrauch, die Sollspannungsvorgabe angepasst. Abweichungen im Energieverbrauch können sich beispielsweise durch eine unerwartete Änderung des Fahrverhaltens oder unerwartet intensiven Nutzung von elektrischen Verbrauchern ändern.

Nach diesem Ausführungsbeispiel wird die Basisspannung durch das vorausschauende Energiemanagement des Koppelspeichersystems zeitabhängig in einer Weise gewählt, die die Vorteile der beiden Technologien der Energiespeicher BSB und LiB in möglichst allen Betriebsphasen nutzbar macht.

Es wird dabei von einem Fahrzeug ausgegangen, das insbesondere über die Funktionen einer Bremsenergierückgewinnung (BER) und einer automatischen Motor-Stopp-Start-Funktion (MSA) verfügt.

Bei der BER wird eine kurzfristige Anhebung der Spannung am Ausgang der leistungselektronischen Einheit durch kurzzeitiges Abgreifen eines erhöhten Drehmoments von der Antriebswelle des Motors erreicht. Das kurzfristige Abgreifen ist dabei auf Schlepphasen und Bremsphasen gerichtet, in denen der Motor ohne eigenen Antrieb durch die kinetische Energie des Fahrzeugs mitgeschleppt wird. Anstatt einer Umwandlung der kinetischen Energie in Wärme in einer Bremsanlage des Fahrzeugs kann die überschüssige kinetische Energie in elektrische Energie gewandelt werden und im Koppelspeichersystem gespeichert werden. Je günstiger die Stromaufnahme des Koppelspeichersystems ist, umso effizienter kann dieser Umwandlung erfolgen.

Bei der Funktion MSA wird der Verbrennungsmotor bei Stoppphasen des Fahrzeugs während des laufenden Fahrbetriebs (z.B. bei einer Rotphase an einer Verkehrsampel) abgestellt und zum Beginn einer folgenden Fahrphase automatisch wieder gestartet.

Die Spannungsvorgabe, d.h. die einzustellende Basisspannung, erfolgt im Wesentlichen auf Basis des Kriteriums der Ladebilanz, die in Bezug auf den aktuellen Fahrzustand des Fahrzeugs und in Bezug auf einen künftigen Fahrzustand des Fahrzeugs vom prädiktiven Energiemanagement ermittelt wird.

Die Betriebsstrategie des Energiemanagements für das Koppelspeichersystem beruht darauf, dass es bei umso negativerer Ladebilanz das Steuergerät eine umso höhere Basisspannung vorgibt. Exemplarisch kann eine Spannung von 13,3 - 13,6 Volt angegeben werden. Dadurch wird bei einem Fahrprofil mit einer negativen Ladebilanz verhindert, dass durch die häufigen Motor-Stopp-Phasen mit Entladung des Koppelspeichersystems und nachfolgender Hochstrombelastung durch den Start ein derart hohes Maß an Entladung der BSB erfolgt, dass während des Warmstarts ein instabile elektrische Spannungslage im Bordnetz entstehen kann. Dies beruht auf dem Zusammenhang, dass bei einer Hochstrombelastung aus dem Koppelspeichersystem die Stromentnahme überwiegend aus der BSB erfolgt, was in dieser Ausführungsform dem geringeren Entladeinnenwiderstand der BSB im Vergleich zur LiB geschuldet ist. Eine spannungsstützende Funktion durch die LiB ist also nur dann erreichbar, wenn der Ladezustand der LiB aufgrund der dem Fachmann bekannten Ruhespannungskennlinie oberhalb eines Mindestmaßes von etwa 0-5 % liegt.

Ein Fahrprofil mit einer negativen Ladebilanz ergibt sich insbesondere bei einer zeitlichen Häufung von Motor-Stopp-Phasen der Funktion MSA mit folgendem Warmstart. Dies betrifft insbesondere Fahrstrecken mit einem hohen Stadtanteil.

Das prädiktive EM erkennt eine solche Häufung z.B. anhand der eingegebenen Navigationsdaten, d.h. anhand der bevorstehenden Fahrtroute. Es kann der innerörtliche Anteil der bevorstehenden Fahrtroute relativ zum außerörtlichen Anteil der bevorstehenden Fahrtroute als ein Parameter α dienen, um die Basisspannung zwischen einer Bezugsspannung (exemplarisch 13,0 Volt in dem ausgeführten System, in Fig. 2 am oberen Rand der schraffierten Fläche in Richtung zunehmender Ruhespannung liegend) und einem maximal zulässigen Spannungswert (i.f. Maximalspannung) zum Schutz der Energiespeicher vor einer dauerhaften Überspannung (exemplarisch 14,8 Volt in dem ausgeführten System) in einer linearen Korrelation gemäß dem Parameter α einzustellen.

Als eine weitere Datenquelle für das prädiktive Energiemanagement dienen Verkehrsinformationsdaten, z.B. RTTI (real time traffic information). Falls z.B. eine Staulage (unabhängig ob außerorts oder innerorts) auf einer bevorstehenden Route gemeldet wird, setzt das prädiktive EM die Sollvorgabe der Basisspannung nach oben. Dies kann z.B. gemäß einem Parameter β erfolgen, der angibt um welchen Anteil die bevorstehende Fahrt durch den Stau verlängert wird.

Eine negative Ladebilanz ist durch das prädiktive EM auch bei extremen Temperaturverhältnissen erkennbar. Wird eine Fahrt bei extremen Außentemperaturbedingungen angetreten, wird die Basisspannung zwischen der Bezugsspannung und der Maximalspannung um einen Parameter γ erhöht, der mit der Temperaturdifferenz der Außentemperatur von einem Bezugstemperaturwert korreliert. Bei extremen Außentemperaturen ist von einer erhöhten Anforderung durch Heiz-, Lüftungs- und Klimasystemen im Fahrzeug auszugehen. Zusätzlich kann die Energie- und Leistungseffizienz der beiden Energiespeicher bei extremen Temperaturen beeinträchtigt sein.

Wird zum Beispiel der Koppelspannung durch Einstellung der Basisspannung vor einer Fahrt mit negativer Ladebilanz von 13,0 Volt auf 13,3 Volt angehoben, um einen Ausgleich der negativen Ladebilanz vor deren Eintritt ausgleichbar zu machen. Dies ist vorteilhaft, da die anfallende Rekuperationsenergie durch BER bei einer Fahrt mit negativer Ladebilanz den angeforderten Energieverbrauch nicht kompensiert.

Die erhöhte Basisspannung dient in diesem Fall der Erhöhung bzw. Erhaltung des Ladezustands des Koppelspeichersystems. Das dadurch erfolgende geringfügige Entgegenwirken der Effizienz der Rekuperation durch steigenden Innenwiderstand der LiB mit steigendem Ladezustand ist dabei unerheblich. Aufgrund der diesem Fall zugrunde liegenden Ausgangsposition der negativen Ladebilanz ist die zunehmende Entladung durch die rekuperierte Energie augenscheinlich nicht kompensierbar, obwohl ein die Rekuperationseffizienz begünstigender erniedrigter Ladezustand herrscht.

Die Erhöhung der Basisspannung führt somit zur Stabilisierung der Spannungslage im Bordnetz und zu einer Erhöhung der Verfügbarkeit der Funktion MSA bei nur geringfügig reduziertem Potential zur Rekuperation. Außerdem dient ein erhöhter Ladezustand bei Beendigung des Fahrbetriebs als elektrische Energiereserve für den Übergang in den Ruhezustand des Fahrzeugs. Dieser Übergang wird als Nachlauf bezeichnet und erfordert je nach Fahrzeugtyp nach Beendigung des Fahrbetriebs in einer Größenordnung von bis zu 2 Ah.

Hingegen wäre eine dauerhafte Einstellung der Vorgabe einer Basisspannung von 13,3 Volt, die nicht auf Fahrprofile mit einer negativen Ladebilanz beschränkt ist, für das System nachteilig, da dies eine langsame Vollladung der LiB zur Folge hätte. Dies würde in einem ineffizienten Rekuperationspotential resultieren, da die Stromaufnahmefähigkeit der LiB bei zunehmendem Ladezustand steigt und das zur Verfügung stehende Überpotential infolge steigender Ruhespannung zusätzlich sinkt.

Ein umso höher prognostizierter Bedarf an Nachlaufenergie, führt zu einer umso höher einzustellenden Basisspannung zur Schaffung einer Energiereserve im Koppelspeichersystem während der Fahrt. Ohne Erhöhung der Basisspannung während der Fahrt oder gegen Ende einer Fahrt erfolgt die Energieentnahme für den Nachlauf aus einem Koppelspeichersystem unter möglicher Entleerung der LiB und einer Teilentladung der BSB. Dies führt zu einer erhöhten Zyklisierung der BSB, die aufgrund deren verhältnismäßig geringen Zyklenlebensdauer auf die Alterung und den Verschleiß der BSB beschleunigend wirkt. Um eine hohe Verfügbarkeit des Koppelspeichersystems zu gewährleisten, ist die BSB vor übermäßiger Zyklisierung zu schützen.

Die Anhebung der Basisspannung stellt mit anderen Worten sicher, dass in der LiB eine Energiemenge vorgehalten ist, die erwartungsgemäß zu späteren Zeitpunkten (z.B. beim Nachlauf) der LiB entnommen wird, ohne der BSB Ladung zu entnehmen. Dies bedeutet, dass eine prädiktiv veranlasste Anhebung der Koppelspannung (durch Anlegen der vorgegebenen Basisspannung) dazu führt, dass innerhalb des Koppelspeichersystems selbst beim Eintritt einer negativen Ladebilanz die Zyklisierungslast des Koppelspeichersystems durch die LiB getragen wird. Zu beachten ist dabei, dass der höhere Entladeinnenwiderstand der LiB im Vergleich zum Entladeinnenwiderstand der BSB bei einem im Vergleich zu einem Warmstart kleinen Entladestrom nicht der Tatsache entgegensteht, dass dieser Entladestrom in erster Linie der LiB (und nicht der BSB) entnommen wird, sofern die Wirkung der erhöhten Basisspannung in der beschriebenen Weise erfolgt.

Der Aufbau eines negativen Überpotentials an der BSB, das erst zu einer Entladung der BSB führen würde, setzt ein negatives Überpotential an der LiB in einer Höhe voraus, welche die Potentialdifferenz zwischen der Ruhespannung der BSB und der angelegten Basisspannung übersteigt. Mit anderen Worten kann bei dem gegebenen Entladestrom diese Potentialdifferenz an dem Entladeinnenwiderstand der LiB abfallen, ehe es zu einer signifikanten Entladung der Bleibatterie kommt. Erst ab einem hohen Strom, der bei dem gewählten System größer als etwa 100 A ist, (z.B. Warmstartstrom) kommt es zu einem Spannungsabfall am Entladeinnenwiderstand der LiB in einem Maße, dass die Koppelspannung zu einem negativen Überpotential an der BSB führt. In dieser Situation kommt der geringere Entladeinnenwiderstand der BSB im Vergleich zur LiB zum Tragen, so dass der (weitere) überwiegende Teil des Warmstartstroms von der BSB getragen wird. Dabei stützt die LiB mit ihrem höheren Entladeinnenwiderstand und geringeren Stromanteil des Warmstartstroms die Spannung der BSB.

Ferner ist zu beachten, dass eine erhöhte Basisspannung im Fahrbetrieb zu einer geringeren Effizienz des Rekuperationspotentials führt, da die durch die Rekuperationsspannung zusätzlich angelegte Potentialdifferenz an der LiB verringert ist und aufgrund der vorhergehenden Ladung der Ladeinnenwiderstand erhöht ist.

Die Betriebsstrategie des prädiktiven EM für das Koppelspeichersystems beruht weiterhin darauf, dass bei umso positiverer Ladebilanz das Steuergerät eine umso niedrigere Basisspannung vorgibt. Bei dem gewählten Ausführungsbeispiel erfolgt eine Reduzierung der Spannung bis einem Wert von 13,0 Volt. Dadurch wird bei einem Fahrprofil mit positiver Ladebilanz, in welchem typischerweise ein hohes Maß an Rekuperationsenergie zu erwarten ist, verhindert, dass der Ladezustand der LiB in Richtung eines zunehmenden Ladezustands zu einem derartigen Maß steigt, dass die Rekuperationseffizienz sinkt. Die Reduzierung der Basisspannung erhöht den Entladestrom der LiB, wodurch der Generator entlastet werden kann. Die Generatorentlastung resultiert in einem verringerten Kraftstoffverbrauch und in einer verbesserten CO₂-Bilanz des Fahrzeugs.

Ein Fahrprofil mit einer positiven Ladebilanz ergibt sich insbesondere bei einer zeitlichen Häufung von zudem relativ langen Schubphasen. Dies betrifft in erster Linie lange Autobahnfahrten. Dabei sind Motor-Stopp-Phasen mit anschließendem Warmstart unwahrscheinlich und für Rekuperation geeignete, längere Fahrphasen ohne Gasbetätigung (z.B. Rollen in einer Kolonne) wahrscheinlich.

Eine weitere Absenkung der Basisspannung kann mit steigender Temperatur der LiB erfolgen, da eine steigende Temperatur die Ladereaktion aktiviert.

Die abgesenkte Basisspannung führt zu einer Entlastung der leistungselektronischen Einheit. Ferner wird das Koppelspeichersystem auf bevorstehende Rekuperationsphasen vorbereitet, in denen die Ladeakzeptanz der LiB effizient nutzbar ist. Dies beruht auf dem hohen Überpotential, das die Spannungsanhebung in einer Rekuperationsphase im Vergleich zu Basisspannung hervorruft.

Den dargestellten Ausführungsformen ist gemeinsam, dass der Betrieb des Koppelspeichersystems anhand des ermittelten Prädiktionsergebnisses im Vordergrund des hier vorliegenden Dokuments steht. Es werden weiterhin verschiedene Beispiele angegeben, die die Ermittlung eines solchen für den Betrieb des Koppelspeichersystems relevanten Prädiktionsergebnisses angeben und nicht explizit an eine Ausgestaltung des ersten Energiespeichers als sekundäre Blei-Säure-Batterie und des zweiten Energiespeichers als sekundäre Lithium-Ionen-Batterie bzw. an ein Fahrzeug mit MSA und BER gebunden sind.

Mithilfe des bzw. der Batteriesensors/en (i.f. Batteriesensorik) lässt sich die Temperatur des/der Speicher bestimmen. Die Temperatur hat einen signifikanten Einfluss auf die erreichbare Ladeleistung und die erreichbare Entladeleistung (i.f. Leistungszustand), die über vorgegebene Kennfelder hinterlegt werden kann. Basierend auf der ermittelten aktuellen Leistungsfähigkeit des Speichers wird die Sollspannungsvorgabe durch das EM ermittelt, d.h. die Basisspannung ermittelt, welche erforderlich ist, um eine gewünschte bevorstehende Veränderung der Ladebilanz zu erreichen. Der Ermittlung des Leistungszustands kann sich neben aktuellen Kenngrößen wie der Temperatur, des Stroms und der Spannung auch zusätzlich auf über einen längeren Zeitraum erfassten und berechneten Daten wie dem Innenwiderstand und/oder mit Alterungsfaktoren gewichtbaren Zyklenzahlen erstrecken. Damit kann eine noch genauere Vorhersage der Leistungsfähigkeit und damit der benötigten Basisspannung erreicht werden.

Anhand der Navigationsdaten liegt der Streckenverlauf vor. Dieser kann in einer vorteilhaften Weiterbildung mit aktuellen Verkehrsinformationsdaten, beispielsweise über RTTI und/oder Fahrzeug-zu-Fahrzeug-Kommunikation, verknüpft werden. Zudem können Wetterdaten, im einfachsten Sinne über eine Außentemperaturmessung und/oder Online-Kommunikation, herangezogen werden, da sich beispielsweise starker Niederschlag deutlich auf die zu erwartende Verkehrslage auswirkt. So werden Sektoren entlang des Streckenverlaufs ermittelt, die sich hinsichtlich ihres erwarteten Profils unterscheiden. Beispielsweise ist dies eine Unterteilung in Innenstadt-typischen Stop & Go-Verkehr, in auflockernden Stadtverkehr bei Annäherung an die Stadtgrenze, in Überlandverkehr bei Verlassen der Stadt und abschließend wieder in Stadtverkehr mit Zielankunft in einem verkehrsberuhigten Bereich. Für jeden Sektor kann eine Sollvorgabe der Basisspannung bestimmt werden, etwa für Innenstadt-typischen Stop & Go-Verkehr zu 13,6 Volt, für lockeren Stadtverkehr zu 13,2 Volt und für Überland zu 13,0 Volt.

In einer vereinfachten Form können entsprechende Sektorerkennungen (auch als Streckenprofilerkennung bezeichnet) auch reaktiv erfolgen, beispielsweise wenn keine Navigationsroute bekannt ist. In diesem Fall kann eine Streckenerkennung über die Mittelung der Fahrzeuggeschwindigkeit in der jüngsten Betriebszeit herangezogen werden. Um ein stabiles Regelverhalten sicherzustellen, ist hierfür eine Entprellzeit im Bereich wenigen Minuten empfehlenswert. Für schnellere Erkennung von Situationswechseln kann zusätzlich ein Änderungsgradient einbezogen werden. Beispielsweise deutet eine mittlere Geschwindigkeit von 90 km/h auf Überlandverkehr mit entsprechender Absenkung der Sollspannungsvorgabe hin. Wird die mittlere Geschwindigkeit zügig auf 50 km/h reduziert und für die Entprellzeit gehalten, kann das EM die Mittelwertbildung aussetzen und direkt die Sektorerkennung auf "Ort" ändern, da vermutlich die Einfahrt in einen Ort stattgefunden hat. Um Fehlerkennungen zu vermeiden, z.B. durch langsame Verkehrsteilnehmer, die kurz darauf überholt werden, wird die Entprellzeit auf Werte im Bereich 30 Sekunden gesetzt.

Zusätzlich kann die Sektorenerkennung durch weitere reaktive Algorithmen des EM angepasst werden. Ein Beispiel hierfür ist ein erwarteter lockerer Stadtverkehr, der sich aber aufgrund eines nicht über Verkehrsinformationen bekannten Staus zu intensivem Stop & Go-Verkehr entwickelt. In diesem Fall wird das Streckenprofil in der Bewertungslogik zu Stop & Go-Verkehr umbewertet mit entsprechender Erhöhung der Sollspannungsvorgabe.
Ein weiterer Einflussfaktor für die Bewertung der Sektoren ist das Verhalten des Fahrzeugführers. Unterschiede können hier beispielsweise in der Nutzung der MSA-Funktion oder im Bremsverhalten liegen, z.B. kurze, starke Bremsvorgänge vs. vorrausschauendem "Ausrollen". Die damit einhergehenden Unterschiede in der Ladebilanzierung werden bei der Sektorberechnung herangezogen. Die Basis hierfür sind selbstlernende Algorithmen des EM, die relevante Fahrerverhaltensweisen erlernen. Moderne Fahrzeuge, die über verschiedene Fahrerprofile verfügen, die per Schlüssel oder Menü fahrerauthentifiziert ausgewählt werden können, ermöglichen eine bessere Lernfunktion, da der Algorithmus den erkannten Fahrer bewertet.

Ebenfalls erfasst werden Daten der leistungselektronischen Einheit bzw. des Generators. Es wird weiterhin von einem Generator ausgegangen. Erlaubt dessen Zustand nur eine eingeschränkte Leistungsfähigkeit, so kann beispielsweise weniger Rekuperationsenergie in die Energiespeicher eingespeist werden. Dem kann durch eine Erhöhung der Basisspannung Rechnung getragen werden bereits bevor die Ladezustandsregelung aufgrund eines absinkenden Ladezustands Gegenmaßnahmen im Sinne einer Erhöhung der Sollspannungsvorgabe ergreift.

Ebenso kann aus den bekannten Strömen der Energiespeicher und der leistungselektronischen Einheit die Höhe des Energiebordnetzbedarfs errechnet werden. Dieser variiert in Abhängigkeit der genutzten elektrischen Verbraucher im Fahrzeug, wobei speziell elektrische Heizungen sehr hohe Energiebedarfe haben. Der erwartete Bordnetzstrom wird in der Streckenbewertung mit in Betracht gezogen in Form der Bestimmung der für MSA-Stopp-Phasen notwendigen Energiemengen.

In Abhängigkeit von Zielort und/oder Fahrer können ebenfalls lernende Funktionen eingesetzt werden, die typische Standzeiten und Standnutzungsverhalten im Sinne von benötigter Energiemenge lernen. Dadurch lässt sich für den letzten Sektor einer Fahrstrecke der zum Ende der Fahrt vorzuhaltende Ladezustand ermitteln, der benötigt wird, um Energiebedarfe im Fahrzeug in einer Standphase bzw. Ruhephase aus dem zweiten Energiespeicher versorgen zu können. Speziell intensive Standnutzung (z.B. Radiohören) oder beispielsweise längere Standphasen an Flughäfen oder mehrtägiges Abstellen des Fahrzeugs erhöhen den Energiebedarf für die Standphasen (z.B. die durch längere Zeit wirkendem Ruhestrom). Deren Erkennung kann über Algorithmen angelernt werden. Vorteilhaft ist dabei eine Verknüpfung mit Fahrerprofil und/oder Navigationsziel.

Insgesamt macht das prädiktive Energiemanagement in Kombination mit dem Koppelspeichersystem die spezifischen Vorteile der das Koppelspeichersystem bildenden Energiespeicher nutzbar. Es ist auf Koppelspeichersystem mit einer Nennspannungslage von 14 Volt bis 48 Volt anwendbar.

Die zielgerichtete und vorausschauende Nutzung der spezifischen Vorteile der das Koppelspeichersystem bildenden Energiespeicher führt zu einer hohen Stabilität und Verfügbarkeit des Energiebordnetzes bei einer Reduzierung von Kraftstoffverbrauch und CO₂-Emissionen des Gesamtfahrzeugs durch steigende Rekuperationseffizienz, frühzeitige Generatorentlastung und intensive Nutzung von vielen MSA-Stopp-Phasen.

Das prädiktive Energiemanagement hat außerdem eine lebensdauerverlängernde Wirkung für die BSB. Die zielgenaue Nutzung des Koppelspeichersystems ermöglicht außerdem eine kostengünstige Auslegung des Systems in Bezug auf die zu wählenden Kapazitäten der Energiespeicher.

## Patentansprüche

1. Kraftfahrzeug mit einem Steuergerät, mit einer leistungselektronischen Einheit und mit einer Energiespeichervorrichtung, die einen ersten elektrischen Energiespeicher und einen zu dem ersten elektrischen Energiespeicher parallel geschalteten oder parallel schaltbaren zweiten elektrischen Energiespeicher umfasst, wobei
- die beiden Energiespeicher eine gemeinsame Koppelspannung bei jeweils unterschiedlichen Ladezuständen aufweisen, wobei sich die Koppelspannung bei direkter galvanischer Verbindung der beiden Energiespeicher als den beiden Energiespeichern gemeinsame Spannung einstellt,
- an der Energiespeichervorrichtung eine von der Koppelspannung abweichende Basisspannung im Wesentlichen von der leistungselektronischen Einheit einstellbar ist, **dadurch gekennzeichnet, dass** das Steuergerät derart ausgebildet ist, dass
- ein auf dem Steuergerät lauffähiges prädiktives Energiemanagement eine Sollvorgabe der Basisspannung in Abhängigkeit von einer prädizierten Ladebilanz der Energiespeichervorrichtung ermittelt, und
- das prädiktive Energiemanagement bei einem bevorstehenden Fahrprofil mit einer prädizierten negativen Ladebilanz die Basisspannung erhöht.

2. Kraftfahrzeug nach Anspruch ,
**dadurch gekennzeichnet, dass**
- das prädiktive Energiemanagement bei einem bevorstehenden Fahrprofil mit einer prädizierten positiven Ladebilanz die Basisspannung reduziert.

3. Kraftfahrzeug nach einem der vorhergehenden Ansprüche,
**dadurch gekennzeichnet, dass**
- das prädiktive Energiemanagement bei einer bevorstehenden Standphase die Basisspannung erhöht.

4. Kraftfahrzeug nach einem der vorhergehenden Ansprüche,
**dadurch gekennzeichnet, dass**
- das prädiktive Energiemanagement für einen bevorstehenden Zeitraum eine Ladebilanz der Energiespeichervorrichtung prädiziert anhand einer Auswahl der Datenquellen: Navigationsdaten, Verkehrsdaten, Erkennungsdaten eines Fahrzeugnutzertyps, Fahrzeug-Fahrzeug-Kommunikationsdaten, Streckenhäufigkeitserkennungsdaten, Zustandsdaten der leistungselektronischen Einheit und Zustandsdaten der beiden elektrischen Energiespeicher wie Ladezustand oder Temperatur.

5. Kraftfahrzeug nach einem der vorhergehenden Ansprüche,
**dadurch gekennzeichnet, dass**
- dem ersten elektrischen Energiespeicher ein erster Batteriesensor zugeordnet ist, und
- dem zweiten elektrischen Energiespeicher ein zweiter Batteriesensor zugeordnet ist.

6. Kraftfahrzeug nach einem der vorhergehenden Ansprüche,
**dadurch gekennzeichnet, dass**
- der erste elektrische Energiespeicher als Blei-Säure-Batterie ausgeführt ist, und
- der zweite elektrische Energiespeicher als Lithium-Ionen-Batterie oder als Superkondensator ausgeführt ist.

## Claims

1. Motor vehicle having a control device, with an electronic power unit and with an energy storage device which comprises a first electric energy store and a second electric energy store which is connected or can be connected in parallel with the first electric energy store,
wherein
- the two energy stores have a common coupling voltage at respective different states of charge, wherein when there is a direct galvanic connection between the two energy stores the coupling voltage is set as a voltage which is common to the two energy stores,
- a basic voltage which differs from the coupling voltage can be set at the energy storage device essentially by the electronic power unit, **characterized in that** the control device is embodied in such a way that
- a predictive energy management system which can run on the control device determines a predefined setpoint value of the basic voltage in accordance with a predicted charge balance of the energy storage device, and
- the predictive energy management system increases the basic voltage when there is an imminent driving profile with a predicted negative charge balance.

2. Motor vehicle according to Claim,
**characterized in that**
the predictive energy management system reduces the basic voltage when there is an imminent driving profile with a predicted positive charge balance.

3. Motor vehicle according to one of the preceding claims,
**characterized in that**
- the predictive energy management system increases the basic voltage when there is an imminent stationary phase.

4. Motor vehicle according to one of the preceding claims,
**characterized in that**
- the predictive energy management system predicts, for an imminent time period, a charge balance of the energy storage device on the basis of a selection of the data sources: navigation data, traffic data, detection data of a type of motor vehicle user, vehicle-to-vehicle communication data, route-frequency-detection data, status data of the electronic power unit, and status data of the two electric energy stores such as the state of charge or temperature.

5. Motor vehicle according to one of the preceding claims,
**characterized in that**
- a first battery sensor is assigned to the first electric energy store, and
- a second battery sensor is assigned to the second electric energy store.

6. Motor vehicle according to one of the preceding claims,
**characterized in that**
- the first electric energy store is embodied as a lead acid battery, and
- the second electric energy store is embodied as a lithium-ion battery or as a supercapacitor.

## Revendications

1. Véhicule automobile, comprenant un appareil de commande, une unité électronique de puissance et un dispositif accumulateur d'énergie qui comprend un premier accumulateur d'énergie électrique et un deuxième accumulateur d'énergie électrique connecté ou pouvant être connecté en parallèle au premier accumulateur d'énergie électrique, dans lequel
- les deux accumulateurs d'énergie présentent une tension de couplage commune pour des états de charge respectivement différents, la tension de couplage devenant une tension commune aux deux accumulateurs d'énergie en présence d'une connexion galvanique directe des deux accumulateurs d'énergie,
- une tension de base différente de la tension de couplage peut être réglée substantiellement par l'unité électronique de puissance au niveau du dispositif accumulateur d'énergie,
**caractérisé en ce que** l'appareil de commande est réalisé de telle sorte que
- un dispositif de gestion d'énergie prédictif pouvant s'exécuter sur l'appareil de commande détermine une valeur de consigne de la tension de base en fonction d'un bilan de charge prédit du dispositif accumulateur d'énergie, et
- le dispositif de gestion d'énergie prédictif augmente la tension de base pour un profil de conduite imminent dont un bilan de charge prédit est négatif.

2. Véhicule automobile selon la revendication, **caractérisé en ce que**
- le dispositif de gestion d'énergie prédictif réduit la tension de base pour un profil de conduite imminent dont un bilan de charge prédit est positif.

3. Véhicule automobile selon l'une quelconque des revendications précédentes, **caractérisé en ce que**
- le dispositif de gestion d'énergie prédictif augmente la tension de base pour une phase d'immobilisation imminente.

4. Véhicule automobile selon l'une quelconque des revendications précédentes, **caractérisé en ce que**
- le dispositif de gestion d'énergie prédictif prédit pour une période de temps imminente un bilan de charge du dispositif accumulateur d'énergie à l'aide d'une sélection des sources de données : des données de navigation, des données de trafic, des données de reconnaissance d'un type d'utilisateur de véhicule, des données de communication entre véhicules, des données de reconnaissance de fréquence d'itinéraire, des données d'état de l'unité électronique de puissance et des données d'état des deux accumulateurs d'énergie électrique, telles que l'état de charge ou la température.

5. Véhicule automobile selon l'une quelconque des revendications précédentes, **caractérisé en ce que**
- le premier accumulateur d'énergie électrique est associé à un premier capteur de batterie, et
- le deuxième accumulateur d'énergie électrique est associé à un deuxième capteur de batterie.

6. Véhicule automobile selon l'une quelconque des revendications précédentes, **caractérisé en ce que**
- le premier accumulateur d'énergie électrique est réalisé sous la forme d'une batterie plomb-acide, et
- le deuxième accumulateur d'énergie électrique est réalisé sous la forme d'une batterie lithium-ions ou de supercondensateur.
